Europäisches Patentamt

European Patent Office

Office européen des brevets

(11) Veröffentlichungsnummer: **0 271 864 B1**

(12) **EUROPÄISCHE PATENTSCHRIFT**

(45) Veröffentlichungstag der Patentschrift: **01.04.92**

(21) Anmeldenummer: **87118527.8**

(22) Anmeldetag: **14.12.87**

(51) Int. Cl.⁵: **F16D  65/56**

(54) **Betätigungsvorrichtung mit selbsttätiger Nachstellung für Bremsen, insbesondere von Schwerlastfahrzeugen.**

(30) Priorität: **18.12.86 DE 8633923 U**

(43) Veröffentlichungstag der Anmeldung:
**22.06.88 Patentblatt  88/25**

(45) Bekanntmachung des Hinweises auf die
Patenterteilung:
**01.04.92 Patentblatt  92/14**

(84) Benannte Vertragsstaaten:
**DE FR GB IT**

(56) Entgegenhaltungen:
**EP-A- 0 008 452       EP-A- 0 145 535
EP-A- 0 151 070       EP-A- 0 190 453
FR-A- 2 339 783       GB-A- 2 035 485**

(73) Patentinhaber: **LUCAS INDUSTRIES public limited company
Great King Street
Birmingham, B19 2XF West Midlands(GB)**

(72) Erfinder: **Giering, Wilfried
Poststrasse 20
W-5442 Mending(DE)**

(74) Vertreter: **Goetz, Rupert, Dipl.-Ing. et al
Wuesthoff & Wuesthoff Patent- und Rechtsanwälte Schweigerstrasse 2
W-8000 München 90(DE)**

## Beschreibung

Die Erfindung betrifft eine Betätigungsvorrichtung mit selbsttätiger Nachstellung für Bremsen, insbesondere von Schwerlastfahrzeugen, mit

- einem Gehäuse, das eine Gehäuseachse aufweist und eine rings um diese angeordnete erste Nockenfläche umschließt,
- einem Drehkörper, der um die Gehäuseachse drehbar ist, einen axialen Fortsatz zum Ankuppeln eines Betätigungsgliedes hat und eine zweite Nockenfläche aufweist, mit der er sich an der ersten Nockenfläche zum Hervorrufen einer von seiner Drehung abhängigen axialen Verschiebung abstützt,
- einem ersten Schraubkörper, der um die Gehäuseachse drehbar ist,
- einem zweiten Schraubkörper, der gegen Drehen festgehalten, zum Ausüben einer Betätigungskraft auf einen Bremsbacken ausgebildet und mit dem ersten Schraubkörper durch eine Nachstellgewindepaarung verbunden ist,
- einer ersten Kupplungsanordnung, die ein begrenztes Drehmoment vom Drehkörper auf den ersten Schraubkörper zum axialen Nachstellen des Bremsbackens überträgt, und
- einer Rückstellwelle, die in seitlichem Abstand von der Gehäuseachse im Gehäuse gelagert und über ein Ritzel mit dem ersten Schraubkörper gekuppelt ist, wodurch die Rückstellwelle ein Zurückschrauben der beiden Schraubkörper in bezug auf einander zum Auswechseln des Bremsbackens ermöglicht, ein unbeabsichtigtes Zurückschrauben im Betrieb jedoch verhindert.

Bei einer bekannten Betätigungsvorrichtung dieser Gattung (EP-A-0190453) ist die Rückstellwelle im Gehäuse axial verschiebbar gelagert und durch eine Feder in einer Richtung vorgespannt, in der eine an der Rückstellwelle ausgebildete Ratschenverzahnung in eine komplementäre Verzahnung an einem in das Gehäuse eingeschraubten Stopfen eingreift. Durch den Stopfen erstreckt sich ein Zapfen der Rückstellwelle, an dem ein Innensechskant ausgebildet ist. Am entgegengesetzten Ende der Rückstellwelle ist ein Vielnutprofil ausgebildet, das in ein komplementäres Innenprofil eines Ritzels eingreift. Das Ritzel kämmt ständig mit dem ersten Schraubkörper, so daß dieser durch die im Betrieb miteinander in Eingriff stehenden, an der Rückstellwelle und am Stopfen ausgebildeten Ratschenverzahnungen an einer Drehung entgegen der Nachstelldrehrichtung gehindert ist. Zum Auswechseln der Bremsbacken läßt sich der erste Schraubkörper dadurch zurückdrehen, daß die Rückstellwelle mit einem an ihrem Zapfen angreifenden Sechskantschlüssel axial nach innen gedrückt wird, wobei die Ratschenverzahnungen sich voneinander lösen, und die Rückstellwelle dann zurückgedreht wird.

Bei Betätigung der Bremse, der die bekannte Betätigungsvorrichtung zugeordnet ist, dreht sich jeweils der erste Schraubkörper, so daß über das Ritzel auch die Rückstellwelle gedreht wird. Eine Nachstellung ist erst dann möglich, wenn die an der Rückstellwelle ausgebildete Ratschenverzahnung gegenüber derjenigen des Stopfens um eine volle Zahnteilung gedreht worden ist. Der erforderlichen Nachstellung wirkt ein Drehmoment entgegen, das von der Axialkraft der die Rückstellwelle belastenden Feder an den Ratschenverzahungen hervorgerufen wird. Die Nachstellung wird also umsomehr erschwert, je kräftiger diese Feder ist und je steiler und höher die Ratschenverzahnungen sind. Würde man die Feder wenig kräftig sowie die Steilheit und Höhe der Ratschenverzahnung gering bemessen, so würde die Gefahr einer unbeabsichtigten Rückstellung infolge von Erschütterungen bestehen. Diese Gefahr wird noch erhöht, wenn man die Ratschenverzahnungen mit einer kleinen Zahnteilung ausführt, um eine feinstufige Nachstellung zu ermöglichen.

Der Erfindung liegt deshalb die Aufgabe Zugrunde, eine Betätigungsvorrichtung mit selbsttätiger Nachstellung für Bremsen derart zu gestalten, daß sie eine genaue Einhaltung eines vorgegebenen Bremslüftspiels ermöglicht, ohne gegen Erschütterungen empfindlich zu sein.

Die Aufgabe ist erfindungsgemäß bei einer Betätigungsvorrichtung der eingangs beschriebenen Gattung dadurch gelöst, daß die Rückstellwelle in einer Stellung blockierbar ist, in der sie mit dem Ritzel nur durch eine Freilauf-Rutschkupplung verbunden ist, die ein Drehen des ersten Schraubkörpers nur im Sinne einer Verkleinerung des Bremslüftspiels zuläßt.

Das Ritzel kann unmittelbar mit der Verzahnung kämmen; bei großen Abständen zwischen der Gehäuseachse und der Achse der Rückstellwelle kann es jedoch zweckmäßiger sein, daß das Ritzel mit der Verzahnung durch einen Zahnriemen oder eine Kette o. dgl. verbunden ist. Das Getriebe kann auch ein Schnecken- oder Schraubrädergetriebe sein, wenn es aus Platzgründen zweckmäßig ist, die Rückstellwelle nicht parallel, sondern beispielsweise im rechten Winkel zur Gehäuseachse anzuordnen. Die Begriffe Verzahnung und Ritzel sind dementsprechend weit auszulegen und nicht etwa auf stirnverzahnte Bauteile zu beschränken.

Vorzugsweise weist die Freilauf-Rutschkupplung ein erstes und ein zweites Kupplungsteil auf, von denen das erste durch axiales Verspannen mit der Rückstellwelle im Gehäuse festsetzbar ist, und das zweite Kupplungsteil am Ritzel ausgebildet und mit dem ersten Kupplungsteil durch eine Feder verbunden ist, die beim Drehen des zweiten Kupplungsteils in Nachstellrichtung durchrutscht.

Ferner ist es vorteilhaft, wenn die Rückstellwelle und das Ritzel Formteile aufweisen, die bei gelöster Blockierung der Rückstellwelle in formschlüssigen gegenseitigen Eingriff bringbar sind.

Schließlich ist die erste Kupplungsanordnung vorzugsweise ebenfalls eine Freilauf-Rutschkupplung und läßt eine Drehung des Drehkörpers entgegen der Nachstelldrehrichtung ohne den ersten Schraubkörper zu.

Ein Ausführungsbeispiel der Erfindung wird im folgenden anhand schematischer Zeichnungen mit weiteren Einzelheiten erläutert. Es zeigt:

Fig. 1    eine teilweise als axialer Schnitt dargestellte Draufsicht einer Teilbelag-Scheibenbremse mit einer erfindungsgemäßen Betätigungsvorrichtung,

Fig. 2    einen vergrößerten axialen Schnitt entsprechend Fig. 1 und

Fig. 3    den Querschnitt III-III in Fig. 2.

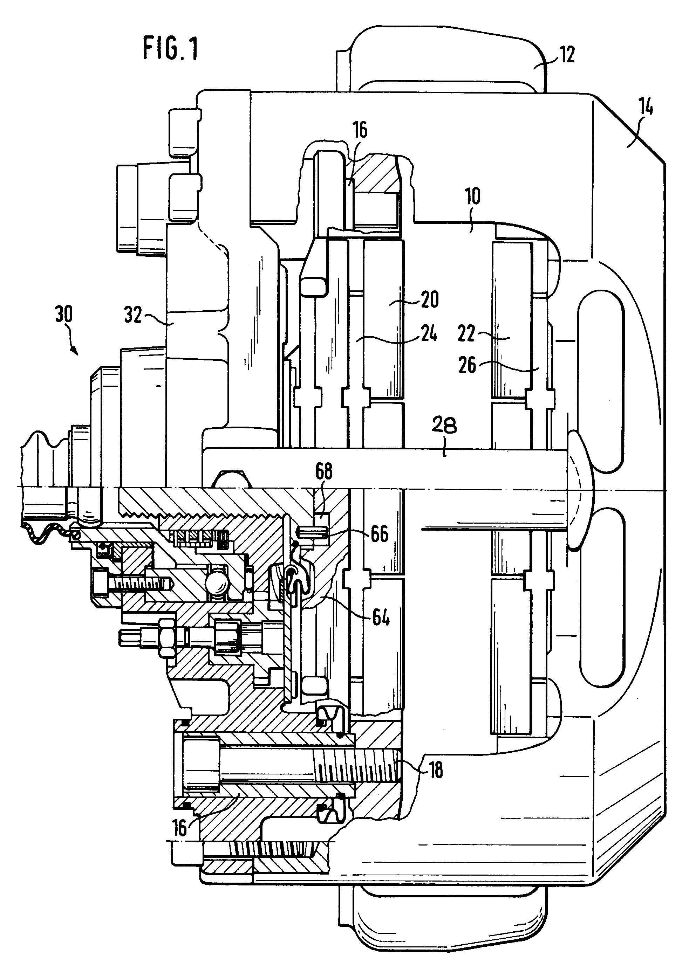

Die dargestellte Scheibenbremse ist einer Bremsscheibe 10 zugeordnet und hat einen Bremsträger 12, an dem ein Schwimmsattel 14 parallel zur Achse der Bremsscheibe verschiebbar geführt ist. Als Führungen dienen zwei Büchsen 16, die mit je einer Schraube 18 am Bremsträger 12 befestigt sind. Der Schwimmsattel 14 umgreift zwei Bremsbacken 20 und 22, die an je einer Seite der Bremsscheibe 10 angeordnet sind und sich mit je einer Rückenplatte 24 bzw. 26 gegen beim Bremsen auftretende Mitnahmekräfte am Bremsträger 12 abstützen. Zum Auswechseln lassen sich die Bremsbacken 20 und 22 durch den Schwimmsattel 14 hindurch nach oben, zum Betrachter der Fig. 1 hin, herausziehen, nachdem ein sie sichernder Bügel 28 gelöst worden ist.

Zum Andrücken des Bremsbackens 20 an die Bremsscheibe 10 ist eine Betätigungsvorrichtung 30 vorgesehen. Der zweite Bremsbacken 22 ist am Schwimmsattel 14 abgestützt und wird durch Reaktionskräfte, die den Schwimmsattel 14 verschieben, gegen die Bremsscheibe 10 gedrückt.

Die Betätigungsvorrichtung 30 hat ein Gehäuse 32, das im dargestellten Beispiel als Bestandteil des Schwimmsattels 14 ausgebildet ist und eine zur Bremsscheibe 10 normale, also zu deren Drehachse parallele, Gehäuseachse A aufweist. Innerhalb des Gehäuses 32 ist ein ringförmiger Nockenkörper 34 angeordnet, an dem eine der Bremsscheibe 10 zugewandte, wendelförmige erste Nockenfläche 36 ausgebildet ist. An dieser stützt sich über ein Kugellager 38 ein glockenförmiger Drehkörper 40 mit einer an ihm ausgebildeten, ebenfalls wendelförmigen zweiten Nockenfläche 42 ab. Der Drehkörper 40 ist zusätzlich, in einem axialen Abstand vom Kugellager 38, mittels eines Gleitlagers 44 im Gehäuse 32 gelagert und ist dahinter durch eine Dichtung 46 gegen einen ersten Gehäusedeckel 48 abgedichtet.

Am Drehkörper 40 stützt sich ein gleichachsig mit ihm angeordneter, hülsenförmiger erster Schraubkörper 50 in axialer Richtung über ein Nadellager 52 ab. Eine Federscheibe 54, die zwischen dem ersten Schraubkörper 50 und einem zweiten Gehäusedeckel 56 eingespannt ist, sorgt dafür, daß die Abstützung dieses Schraubkörpers 50 am Drehkörper 40 in axialer Richtung spielfrei ist. Der zweite Gehäusedeckel 56 ist ringförmig und radial nach innen durch einen Kragen 58 begrenzt.

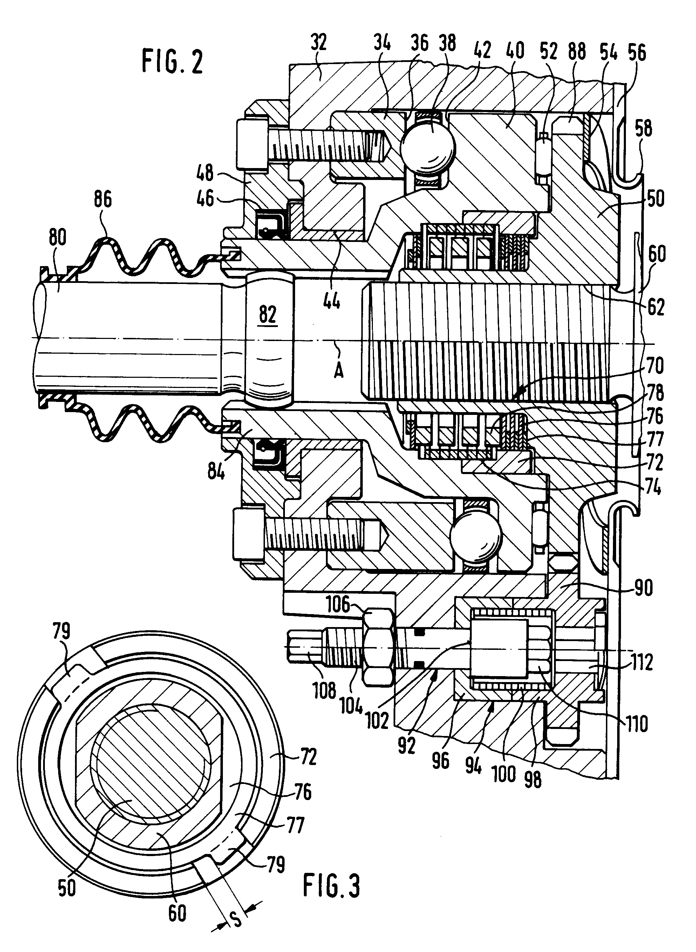

In den hülsenförmigen ersten Schraubkörper 50 ist ein pilzförmiger zweiter Schraubkörper 60 eingeschraubt; diese Schraubverbindung dient zum axialen Nachstellen des Bremsbackens 20 und wird deshalb als Nachstellgewindepaarung 62 bezeichnet. Zwischen dem zweiten Schraubkörper 60 und der Rückenplatte 24 des Bremsbackens 20 ist zur besseren Verteilung von Bremsbetätigungskräften eine Druckplatte 64 angeordnet, die gegenüber dem Bremsträger 12 axial verschiebbar, jedoch gegen Drehen festgehalten ist. Der zweite Schraubkörper 60 ist am Drehen dadurch gehindert, daß ein an ihm achsparallel befestigter Stift 66 mit geringem Spiel in eine zur Zeichnungsebene der Fig. 1 und 2 senkrechte Nut 68 in der Druckplatte 64 eingreift.

Der Drehkörper 40 ist mit dem ersten Schraubkörper 50 durch eine Kupplungsanordnung 70 verbunden. Hierzu gehört ein ringförmiges Zwischenglied 72, das im Drehkörper 40 drehbar gelagert ist und gemeinsam mit diesem eine wendelförmige Mitnahmefeder 74 in radialer Richtung spielfrei umschließt. Die Mitnahmefeder 74 ist derart gewickelt, daß sie eine Drehung des Drehkörpers 40 in einer Betätigungsdrehrichtung auf das Zwischenglied 72 überträgt, jedoch eine Rückdrehung des Drehkörpers 40 ohne das Zwischenglied 72 ermöglicht.

Das Zwischenglied 72 ist mit dem ersten Schraubkörper 50 durch ein Lamellenpaket 76, 77 verbunden, das durch eine Axialdruckfeder 78 derart gespannt gehalten ist, daß eine Drehung des Zwischengliedes 72 reibschlüssig auf den ersten Schraubkörper 50 übertragen wird, solange dabei ein bestimmtes Drehmoment nicht überschritten wird. Das Lamellenpaket 76, 77 besteht aus Lamellen 76, die axial verschiebbar und zu gemeinsamer Drehung mit dem ersten Schraubkörper 50 verbunden sind, und aus Lamellen 77, die axial verschiebbar mit dem Zwischenglied 72 verbunden sind. Die Lamellen 77 haben je zwei Zungen 79, die mit einem Spiel S in achsparallele Nuten des Zwischengliedes 72 eingreifen. Das Spiel S bestimmt das Bremslüftspiel.

Zum Betätigen der Bremse ist ein im dargestellten Beispiel stangenförmiges Betätigungsglied 80 vorgesehen, das mit einem an ihm ausgebildeten teilkugeligen, außenverzahnten Kopf 82 in einen entsprechend innenverzahnten rohrförmigen Fortsatz 84 des Drehkörpers 40 eingreift. Der rohrförmige Fortsatz 84 ist auf der in Fig. 1 und 2 linken Seite des Gehäuses 32 frei zugänglich, so daß das Betätigungsglied 80 leicht montiert werden kann. Die am Kopf 82 des Betätigungsgliedes 80 und am rohrförmigen Fortsatz 84 des Drehkörpers 40 ausgebildeten, komplementären Verzahnungen, die auch als Vielnutprofile bezeichnet werden können, ermöglichen es, das Betätigungsglied 80 zum Ausgleich von Herstellungs- und Einbautoleranzen sowie bei Verschiebungen des Schwimmsattels 14 mehr oder weniger weit in den rohrförmigen Fortsatz 84 hineinzuschieben. Dabei und im Betrieb kann das Betätigungsglied 80 in einem bestimmten Winkelbereich von der Gehäuseachse A abweichen.

Der erste Schraubkörper 50 hat im Bereich zwischen dem Nadellager 52 und der Federscheibe 54 eine Verzahnung 88, die im dargestellten Beispiel als äußere Geradverzahnung ausgebildet ist und mit einem entsprechend verzahnten Ritzel 90 kämmt. Das Ritzel 90 ist in einem Abstand parallel zur Gehäuseachse A im Gehäuse 32 gelagert und ist mit einer in entsprechender Weise gelagerten Rückstellwelle 92 durch eine Freilaufkupplung 94 verbunden.

Zur Freilaufkupplung 94 gehören zwei topfförmige Kupplungsteile 96 und 98, die stirnseitig aneinanderliegen und in ihren Innen- und Außendurchmessern miteinander übereinstimmen. Das Kupplungsteil 96 ist als selbständiges Bauteil im Gehäuse 32 gelagert; das Kupplungsteil 98 ist hingegen am Ritzel 90 ausgebildet. Die beiden Kupplungsteile 96 und 98 umschließen in radialer Richtung spielfrei eine Feder 100, die so gewickelt ist, daß die Freilaufkupplung 94 bei Drehung des ersten Schraubkörpers 50 im Sinne der zum Nachstellen der Bremse erforderlichen Drehung des ersten Schraubkörpers 50 durchrutscht, diese Drehung also nicht behindert, eine Rückdrehung jedoch verhindert, wenn das Kupplungsteil 96 festgeklemmt ist.

Zum Festklemmen des Kupplungsteils 96 hat die Rückstellwelle 92 eine innen am Kupplungsteil 96 axial anliegende Schulter 102 und einen außerhalb des Gehäuses 32 angeordneten Gewindeabschnitt 104, auf den eine Mutter 106 aufgeschraubt ist. Die Freilaufkupplung 94 wirkt in der beschriebenen Weise, solange die Mutter 106 festgezogen ist. Die Rückstellwelle 92 hat an ihrem in bezug auf das Gehäuse 32 äußeren Ende einen Sechskant 108 oder eine andere zum Aufbringen eines Drehmoments mittels eines Schlüssels o. dgl. geeignete Gestaltung. Das innere Ende der Rückstellwelle 92 ist ebenfalls als Formteil 110 von nicht kreisförmigem Profil, im dargestellten Beispiel als Sechskantkopf, ausgebildet, während am Ritzel 90 ein komplementäres Formteil 112, im dargestellten Beispiel also ein Sechskantloch, ausgebildet ist. Wenn die Mutter 106 abgeschraubt ist, läßt sich die Rückstellwelle 92 so weit in das Gehäuse 32 verschieben, daß die Formteile 110 und 112 ineinandergreifen und infolgedessen durch Drehen der Rückstellwelle 92 das Ritzel 90 und somit auch der erste Schraubkörper 50 zwangsweise in der einen oder anderen Drehrichtung gedreht werden können.

In betriebsbereitem Zustand der Betätigungsvorrichtung ist die Mutter 106 festgezogen, wodurch das Kupplungsteil 96 festgeklemmt ist und die Formteile 110 und 112 am Ineinandergreifen gehindert sind. Zum Betätigen der Bremse wird der Drehkörper 40 mittels des Betätigungsgliedes 80 in der Betätigungsdrehrichtung gedreht. Dabei wird der erste Schraubkörper 50 anfangs von der Kupplungsanordnung 70 mitgedreht.

Nach Überwindung des Bremslüftspiels haben die beiden Bremsbacken 20 und 22 sich an die Bremsscheibe 10 angelegt, die nun einer weiteren axialen Verschiebung der beiden Schraubkörper 50 und 60 eine rasch steigende Reaktionskraft entgegensetzt. Durch diese Reaktionskraft wird die Reibung in der Nachstellgewindepaarung 62 derart gesteigert, daß die Kupplungsanordnung 70 durchrutscht, eine weitere Drehung des Drehkörpers 40 also nur eine zusätzliche axiale Bewegung der beiden Schraubkörper 50 und 60 zur Bremsscheibe 10 hin bewirkt. Beim Lösen der Bremse nach einer solchen Betätigung finden die beschriebenen Bewegungen in umgekehrter Richtung statt. Dabei drängt die Federscheibe 54 den ersten Schraubkörper 50 und mit ihm den Drehkörper 40 und den zweiten Schraubkörper 60 in axialer Richtung von der Bremsscheibe 10 weg.

Wenn jedoch bei Betätigung einer Bremse das Spiel S überwunden wird, ohne daß die Bremsbacken 20 und 22 die Bremsscheibe 10 erreichen und eine entsprechend starke Reaktionskraft entstehen lassen, dann ist dies ein Zeichen dafür, daß wenigstens einer der Bremsbacken so stark verschlissen ist, daß eine Nachstellung erforderlich ist. In diesem Fall wird der erste Schraubkörper 50 über die Kupplungsanordnung 70 vom Drehkörper 40 in dessen Betätigungsdrehrichtung weitergedreht, wobei die Freilaufkupplung 94 durchrutscht und somit die Drehung des ersten Schraubkörpers 50 nicht behindert, während die Anlage des Stifts 66 an der Wand des Lochs 68 den zweiten Schraubkörper 60 am Weiterdrehen hindert. Durch diese Relativdrehung der beiden Schraubkörper 50 und 60 in bezug zueinander wird der zweite Schraubkörper 60 aus dem ersten Schraubkörper 50 herausgeschraubt, und somit die Bremse nachgestellt.

Zum Lösen der Bremse nach einer solchen, mit einer Nachstellung verbundenen, Betätigung wird der Drehkörper 40 mittels des Betätigungsgliedes 80 in entgegengesetzter Richtung gedreht; dabei ist jedoch der erste Schraubkörper 50 durch die an der Federscheibe 54 auftretende Reibung, vor allem aber durch die nun sperrende Freilaufkupplung 94, daran gehindert, sich zusammen mit dem Drehkörper 40 zurückzudrehen. Die Nachstellung, die beim Betätigen der Bremse stattgefunden hat, bleibt somit beim Lösen der Bremse erhalten. Dies gilt auch dann, wenn die Betätigungsvorrichtung oder irgendeines ihrer Bauteile im Betrieb Vibrationen ausgesetzt ist, die vor allem von Motorschwingungen und Fahrbahnunebenheiten hervorgerufen werden können.

Der zweite Schraubkörper 60 wird also während der Lebensdauer der Bremsbacken 20 und 22 schrittweise immer weiter aus dem ersten Schraubkörper 50 herausgeschraubt, bis schließlich die Bremsbacken ausgewechselt werden müssen. Zu diesem Zweck wird in der beschriebenen Weise die Mutter 106 gelöst, die Rückstellwelle 92 in unmittelbaren Eingriff mit dem Ritzel 90 gebracht und dann derart gedreht, daß die beiden Schraubkörper 50 und 60 wieder ineinandergeschraubt werden, bis sie die in den Zeichnungen abgebildete Ausgangsstellung erreicht haben. Sodann wird die Mutter 106 wieder festgezogen, und die Bremse kann mit neuen Bremsbacken 20 und 22 weiterbenutzt werden.

**Patentansprüche**

1. Betätigungsvorrichtung mit selbsttätiger Nachstellung für Bremsen, insbesondere von Schwerlastfahrzeugen, mit
   - einem Gehäuse (32), das eine Gehäuseachse (A) aufweist und eine rings um diese angeordnete erste Nockenfläche (36) umschließt,
   - einem Drehkörper (40), der um die Gehäuseachse (A) drehbar ist, einen axialen Fortsatz (84) zum Ankuppeln eines Betätigungsgliedes (80) hat und eine zweite Nockenfläche (42) aufweist, mit der er sich an der ersten Nockenfläche (36) zum Hervorrufen einer von seiner Drehung abhängigen axialen Verschiebung abstützt,
   - einem ersten Schraubkörper (50), der um die Gehäuseachse (A) drehbar ist,
   - einem zweiten Schraubkörper (60), der gegen Drehen festgehalten, zum Ausüben einer Betätigungskraft auf einen Bremsbacken (20) ausgebildet und mit dem ersten Schraubkörper (50) durch eine Nachstellgewindepaarung (62) verbunden ist,

   - einer ersten Kupplungsanordnung (70), die ein begrenztes Drehmoment vom Drehkörper (40) auf den ersten Schraubkörper (50) zum axialen Nachstellen des Bremsbackens (20) überträgt, und
   - einer Rückstellwelle (92), die in seitlichem Abstand von der Gehäuseachse (A) im Gehäuse (32) gelagert und über ein Ritzel (90) mit dem ersten Schraubkörper (50) gekuppelt ist, wodurch die Rückstellwelle (92) ein Zurückschrauben der beiden Schraubkörper (50, 60) in bezug aufeinander zum Auswechseln des Bremsbackens (20) ermöglicht, ein unbeabsichtigtes Zurückschrauben im Betrieb jedoch verhindert, dadurch **gekennzeichnet,** daß die Rückstellwelle (92) in einer Stellung blockierbar ist, in der sie mit dem Ritzel (90) nur durch eine Freilauf-Rutschkupplung (94) verbunden ist, die ein Drehen des ersten Schraubkörpers (50) nur im Sinne einer Verkleinerung des Bremslüftspiels zuläßt.

2. Betätigungsvorrichtung nach Anspruch 1, dadurch **gekennzeichnet,** daß die Freilauf-Rutschkupplung (94) ein erstes und ein zweites Kupplungsteil (96, 98) aufweist, von denen das erste (96) durch axiales Verspannen mit der Rückstellwelle (92) im Gehäuse (32) festsetzbar ist, und das zweite Kupplungsteil (98) am Ritzel (90) ausgebildet und mit dem ersten Kupplungsteil (96) durch eine Feder (100) verbunden ist, die beim Drehen des zweiten Kupplungsteils (98) in Nachstellrichtung durchrutscht.

3. Betätigungsvorrichtung nach Anspruch 1 oder 2, dadurch **gekennzeichnet,** daß die Rückstellwelle (92) und das Ritzel (90) Formteile (110, 112) aufweisen, die bei gelöster Blockierung der Rückstellwelle (92) in formschlüssigen gegenseitigen Eingriff bringbar sind.

4. Betätigungsvorrichtung nach einem der Ansprüche 1 bis 3, dadurch **gekennzeichnet,** daß die erste Kupplungsanordnung (70) ebenfalls eine Freilauf-Rutschkupplung ist und eine Drehung des Drehkörpers (40) entgegen der Nachstelldrehrichtung ohne den ersten Schraubkörper (50) zuläßt.

**Claims**

1. Actuator with automatic adjustment for brakes, especially of heavy duty vehicles, comprising

- a housing (32) having a housing axis (A) and enclosing a first cam surface (36) arranged circularly around said axis,
- a rotary member (40) which is adapted to be rotated about the housing axis (A), comprises an axial protrusion (84) for coupling of the actuating member (80) and a second cam surface (42) with which said rotary member is supported at the first cam surface (36) to cause an axial displacement on its rotation,
- a first screw member (50) which is adapted to be rotated about the housing axis (A),
- a second screw member (60) which is secured against rotation and is constructed so as to exert an actuating force onto a brake pad (20) and which is connected with the first screw member (50) via a pair of threaded adjustment members (62),
- a first clutch arrangement (70) adapted to transmit a limited torque from the rotary member (40) to the first screw member (50) for the axial adjustment of the brake pad (20), and
- a reset shaft (92) which is mounted in the housing (32) laterally space from the housing axis (A) and is coupled via a pinion (90) to the first screw member (50), the reset shaft (92) thereby permitting a backscrewing of the two screw members (50, 60) with respect to each other for replacing the brake pad (20) but preventing unintentional backscrewing in operation, characterized in that the reset shaft (92) is blockable in a position in which it is connected to the pinion (90) only by a freewheel slip clutch (94) which permits a rotation of the first screw member (50) only in the sense of a reduction of the brake clearance.

2. Actuator according to claim 1, characterized in that the freewheel slip clutch (94) comprises a first and a second clutch member (96, 98), the first (96) of which is adapted to be fixed in the housing (32) by axial clamping with the reset shaft (92) and the second clutch member (98) is formed on the pinion (90) and is connected to the first clutch member (96) by a spring (100) which on rotating of the second clutch member (98) slips in the adjustment direction.

3. Actuator according to claim 1 or 2, characterized in that the reset shaft (92) and the pinion (90) have shaped members (110, 112) which when the blocking of the reset shaft (92) is released are adapted to be brought into positive mutual agreement.

4. Actuator according to any one of claims 1 to 3, characterized in that the first coupling arrangement (70) is likewise a freewheel slip clutch and permits a rotation of the rotary member (40) against the adjustment rotational direction without the first screw member (50).

**Revendications**

1. Dispositif d'actionnement à rattrapage de jeu automatique pour freins, notamment de camions poids lourds, comportant
   - un boîtier (32) qui présente un axe de boîtier (A) et enferme une première surface de came (36) disposée en anneau autour de cet axe,
   - un corps tournant (40) qui peut tourner autour de l'axe de boîtier (A), qui possède un prolongement axial (84) pour l'accouplement avec un organe d'actionnement (80) et présente une deuxième surface de came (42) par laquelle il prend appui contre la première surface de came (36) pour provoquer un déplacement axial dépendant de sa rotation,
   - un premier corps à vis (50) qui peut tourner autour de l'axe de boîtier (A),
   - un deuxième corps à vis (60) qui est bloqué contre la rotation, est conçu pour exercer une force d'actionnement sur une mâchoire de frein (20) et est relié au premier corps à vis (50) par une association de filetages de rattrapage de jeu (62),
   - un premier dispositif d'accouplement (70) qui transmet un couple de rotation limité du corps tournant (40) au premier corps à vis (50) en vue du réglage axial de la mâchoire de frein (20) et
   - un arbre de rappel (92) qui est monté espacé latéralement de l'axe de boîtier (A), dans le boîtier (32) et est accouplé par un pignon (90), avec le premier corps à vis (50), ce qui fait que l'arbre de rappel (92) permet de dévisser les deux corps à vis (50, 60) l'un par rapport à l'autre pour changer la mâchoire de frein (20), mais empêche un dévissage accidentel pendant le fonctionnement, caractérisé en ce que l'arbre de rappel (92) peut être bloqué dans une position dans laquelle il n'est relié avec le pignon (90) que par un accouplement glissant à roue libre qui n'autorise la rotation du premier corps à vis (50) que dans le sens d'une réduction du jeu de relevage de frein.

2. Dispositif d'actionnement selon la revendication 1, caractérisé en ce que l'accouplement glissant à roue libre (94) comporte un premier élément d'accouplement (96) et un deuxième élément d'accouplement (98) dont le premier (96) peut être bloqué dans le boîtier (32) par serrage axial avec l'arbre de rappel (92) et le deuxième élément d'accouplement (98) est prévu sur le pignon (90) et est relié avec le premier élément d'accouplement (96) par un ressort (100) qui glisse dans la direction de rattrapage de jeu, pendant la rotation du deuxième élément d'accouplement (98).

3. Dispositif d'actionnement selon la revendication 1 ou 2, caractérisé en ce que l'arbre de rappel (92) et le pignon (90) présentent des parties profilées (110, 112) qui peuvent être amenées en prise réciproque par concordance de forme, lorsque le blocage de l'arbre de rappel (92) est supprime.

4. Dispositif d'actionnement selon l'une des revendications 1 à 3, caractérisé en ce que le premier dispositif d'accouplement (70) est aussi un accouplement glissant à roue libre et autorise une rotation du corps tournant (40) dans le sens contraire au sens de rattrapage de jeu, sans le premier corps à vis (50).

FIG.1

FIG. 2

FIG. 3